# FASCICULE DE BREVET EUROPEEN

(11) **EP 2 483 979 B1**
(45) Date de publication et mention de la délivrance du brevet: **05.04.2017**
(21) Numéro de dépôt: 10777047.1
(22) Date de dépôt: 30.09.2010
(51) Int. Cl.: H02G 3/04, G02B 6/44

(54) **DISPOSITIF D'INSTALLATION DE CÂBLE DE TRANSMISSION**
VORRICHTUNG ZUR VERLEGUNG EINES SIGNALKABELS
DEVICE FOR INSTALLING A TRANSMISSION CABLE

(30) Priorité: 30.09.2009 FR 0956778
(43) Date de publication de la demande: 08.08.2012
(73) Titulaire: Orange, 75015 Paris (FR)
(72) Inventeur: CAMPION, Jean-Luc, F-22700 Saint Quay Perros (FR); LOUBOUTIN, Jean-Pierre, F-22560 Trebeurden (FR); LANDOUAR, Jean-Michel, F-22300 Tredrez Loquemeau (FR)
(86) Numéro de dépôt international: PCT/FR2010/052059
(87) Numéro de publication internationale: WO 2011/039479

(56) Documents cités:
- EP-A2- 1 220 398
- WO-A2-01/75499
- DE-A1- 3 031 833
- DE-A1-102007 038 327
- JP-A- 2001 116 964
- JP-A- 2006 121 766
- US-B1- 6 424 772

## Description

La présente invention concerne le domaine de la pose des câbles dans les bâtiments.

Pour le câblage de partie terminale dans des bâtiments, tels que des immeubles d'habitations ou de bureaux ou des pavillons, et en vue de desservir ces bâtiments par des câbles supplémentaires tels que câbles à fibre optique, câbles téléphoniques, câbles électriques et câbles de télévision, les opérateurs de réseaux de télécommunications réutilisent si possible l'infrastructure tubulaire existante comprenant divers fourreaux déjà installés dans les bâtiments.

Ces fourreaux sont présents dans la plupart des pièces des bâtiments et servent principalement au câblage téléphonique, au câblage électrique ou au câblage pour la télévision câblée. Leurs cheminements varient considérablement en fonction du type de bâtiment.

La réutilisation de ces fourreaux évite une pose de câbles supplémentaires en apparent, solution soumise notamment à l'accord des copropriétaires des bâtiments et souvent mal acceptée. L'utilisation de fourreaux procure également une garantie de longévité de l'installation, les câbles étant protégés des chocs et autres travaux de réfection des surfaces murales.

Il est donc avantageux de réutiliser aussi souvent que possible un fourreau existant même occupé et cela également pour des questions de rapidité de mise en oeuvre et donc de coût.

Cependant, ceci n'est pas toujours possible, soit parce que le fourreau existant ne dispose plus de place suffisante soit parce que le bâtiment ne dispose pas d'un tel fourreau (cas de bâtiments anciens par exemple).

Lors d'une pose sous fourreau, l'installation d'un câble nécessite de tirer sur le câble. L'action de tirage du câble peut être combinée avec une action de poussage du câble pour limiter les efforts de traction.

D'une façon générale les câbles utilisés aujourd'hui dans le câblage des bâtiments pour les réseaux sont plutôt souples, voire très souples. Ceci constitue un avantage lors d'une installation en apparent par exemple, le câble se conformant au mieux aux angles de murs, carrées de portes, plinthes...mais diminue l'efficacité du poussage.

Les câbles optiques actuellement disponibles sur le marché possèdent des limites d'effort très basses. A titre d'exemple, un câble de 3mm de diamètre supporte de 15 à 20 daN (pour "decanewton") et un câble de 4 mm résiste à environ 40 daN.

Ces limites d'effort sont telles qu'un agent installateur tirant le câble "à la main" peut atteindre et dépasser rapidement ces limites, et ainsi endommager, voire casser la fibre dans certaines conditions de courbure du câble.

Le tirage en fourreau occupé par des câbles déjà présents augmente ces risques.

Il n'est pas envisageable de créer des points d'aide intermédiaire en ligne sur le fourreau car cela nécessite le percement de murs entrainant des retards et des coûts supplémentaires.

L'installateur doit donc prendre des précautions particulières lors de l'installation de ces câbles. Ces précautions ne sont pas compatibles avec des raisons économiques d'obtention du passage de câble en un minimum de temps.

Le document JP 2006-121766 A décrit un dispositif d'installation de câble de transmission dans un bâtiment, le dispositif d'installation comprenant: une gaine de protection étant apte à entourer au moins un câble de transmission, ladite gaine comprenant au moins un évidement longitudinal et ladite gaine ne comprenant pas de fente permettant le retrait dudit au moins un câble, et un élément rigide inséré complètement dans un desdits au moins un évidement; ladite gaine de protection comportant une fente longitudinale permettant le retrait et/ou l'insertion dudit élément rigide.

L'invention vient améliorer la situation.

A cet effet, l'invention se rapporte à un dispositif d'installation de câble de transmission selon la revendication 1.

Le dispositif d'installation de l'invention améliore et simplifie la mise en oeuvre du câblage de la partie terminale en limitant les échecs et les risques d'endommagement des câbles, lors de leur installation.

Il permet de réduire les temps d'installation et en conséquence les coûts.

Grâce à l'élément rigide, le dispositif d'installation peut subir des efforts de traction et de poussage compatibles avec ceux exercés par les opérateurs lors de l'installation de câbles classiques. A titre d'exemple, l'effort admissible en traction est d'environ 80 à 100 daN et l'allongement d'une valeur proche de 1% avec un élément rigide de type verre résine de 1,5 mm de diamètre.

L'élément rigide permet également de limiter les risques de pliure ainsi que celui d'une sollicitation en traction sur un faible rayon de courbure (passage sur angle vif).

Le dispositif d'installation de l'invention permet également l'installation de câbles dans les logements anciens ne disposant pas de fourreaux, par exemple, par passage direct dans des vides disponibles derrière certains revêtements muraux, toiles, lambris ou même au sol sous un parquet ou derrière une plinthe amovible.

L'installation d'un câble dans une conduite avec le dispositif de l'invention est compatible avec l'utilisation d'un dispositif d'aiguillage classique (filin).

Dans un grand nombre de cas, l'installation peut être effectuée par un seul agent.

Selon une caractéristique particulière du dispositif d'installation, l'élément rigide est amovible. Ainsi, il peut être enlevé ou ajouté en fonction de la problématique terrain et ainsi faciliter la mise en oeuvre du câblage. Il est positionné en usine ou lors de l'installation.

Il peut également être enlevé une fois le câble installé dans la conduite. Il peut être enlevé sur une partie seulement, par exemple, sur la partie à installer en apparent dans une habitation.

Le logement libéré dans la gaine de protection peut ensuite être utilisé pour fixer le câble sur un support mural. Un tel câblage dans un appartement est apparent mais discret et peut être mis en place quelque soit la nature du support.

Selon un mode de réalisation particulier, l'élément rigide comporte un étranglement apte à assurer son maintien dans l'évidement de la gaine de protection.

Ce mode de réalisation permet de faciliter davantage le passage du câble dans les conduites en maintenant en place l'élément rigide dans la gaine.

Selon un autre mode de réalisation utilisé seul ou en combinaison avec le précédent mode de réalisation, l'élément rigide comporte un pied adapté pour fixer le dispositif sur un support mural. Dans ce mode de réalisation, l'élément rigide facilite l'installation du câble en mode apparent dans une habitation.

Selon un mode de réalisation, l'élément rigide est un support profilé.

Selon une caractéristique particulière, la gaine de protection a une forme cylindrique. Cette forme est particulièrement adaptée à un coulissement aisé, notamment dans un fourreau.

Dans un mode de réalisation, la gaine de protection est constituée d'au moins un premier et un deuxième cylindres, le premier étant apte à entourer un câble de transmission et le deuxième cylindre étant apte à comporter l'évidement.

La forme plate de la gaine de protection augmente les possibilités d'installation dans des fourreaux déjà occupés par un ou plusieurs câbles. Cette forme permet également une meilleure protection contre les risques de chocs ou de coupures accidentels avec une lame ou un objet contondant lors de travaux de réfection des murs par exemple lorsqu'elle est posée en apparent.

Dans un mode de réalisation, la gaine de protection entoure au moins un premier et un deuxième câbles de transmission, le premier câble étant d'un premier type et le deuxième câble étant d'un deuxième type. Ainsi, la gaine de protection peut permettre le passage simultané de plusieurs câbles, de même type ou de type différent. Ceci permet de diminuer les temps d'installation et d'améliorer l'esthétique lors d'une pose en apparent.

L'invention se rapporte également à une gaine de protection apte à entourer au moins un câble de transmission caractérisée en qu'elle comprend au moins un évidement longitudinal apte à recevoir un élément rigide adapté à la forme de l'évidement.

La gaine de protection contenant un support rigide dans son évidement permet une installation plus rapide et plus aisée dans des bâtiments.

Cette gaine de protection peut également recevoir un support rigide déjà fixé au mur d'une pièce d'habitation, de façon simple, par clipsage par exemple, afin d'installer la gaine comportant un ou plusieurs câbles de transmission, en apparent dans une pièce d'habitation.

L'invention se rapporte encore à un support profilé caractérisé en ce qu'il est apte à être inséré dans un évidement d'une gaine de protection.

D'autres particularités et avantages de la présente invention apparaitront dans la description suivante de modes de réalisation donnés à titre d'exemples non limitatifs, en référence aux dessins annexés, dans lesquels :
- la figure 1 illustre un exemple d'installation d'un câble à l'intérieur d'un bâtiment,
- la figure 2 est un schéma illustrant un dispositif d'installation selon un premier mode de réalisation,
- la figure 3 est un schéma illustrant un support profilé ne formant pas partie de l'invention,
- la figure 4 est un schéma illustrant un dispositif d'installation ne formant pas partie de l'invention,
- la figure 5 est un schéma illustrant un dispositif d'installation selon un deuxième mode de réalisation,
- la figure 6 est un schéma illustrant un dispositif d'installation selon un troisième mode de réalisation,
- la figure 7 est un schéma illustrant l'impact d'un écrasement sur une gaine de protection ne formant pas partie de l'invention,
- la figure 8 est un schéma illustrant une gaine de protection selon une alternative ne formant pas partie de l'invention.

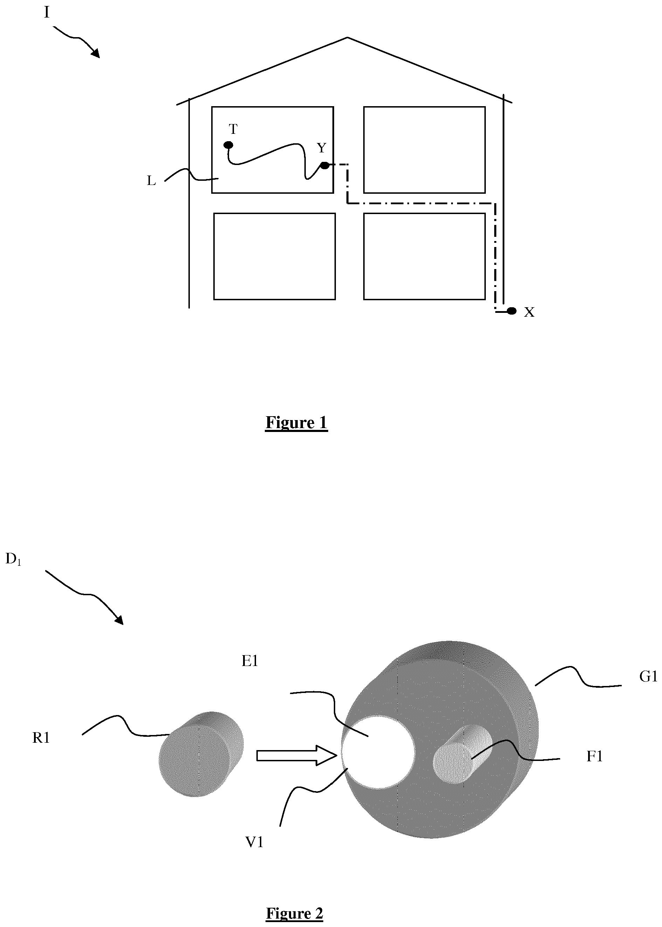

La figure 1 illustre un exemple d'installation d'un câble à l'intérieur d'un bâtiment. Cet exemple a trait à la mise en place d'un câble, par exemple un câble optique, pour permettre le raccordement, à un réseau, d'un résident d'un appartement L situé dans un immeuble I.

La mise en oeuvre du raccordement nécessite deux phases : une première phase lors de laquelle le câble optique est amené jusqu'à une prise terminale située dans l'appartement L et une deuxième phase de fixation lors de laquelle le câble est fixé en mode apparent à l'intérieur de l'appartement L.

La première phase consiste à acheminer le câble d'un point X d'entrée d'immeuble à une prise terminale T disposée dans l'appartement L à la convenance du résident. Cet acheminement est effectué par passage du câble dans une ou plusieurs conduites successives entre le point X et un point Y et par passage en apparent dans l'appartement entre les points Y et T. Une conduite est par exemple une gaine technique, appelée fourreau, réservée pour le passage de câbles et commune à plusieurs appartements ou une gaine installée dans les murs de l'appartement. Cette première phase est réalisée en utilisant un dispositif d'installation, objet de l'invention.

A titre d'alternative, le cheminement entre les points X et Y est effectué, totalement ou en partie, dans des espaces moins "guidés" tels qu'un vide sanitaire ou des doubles cloisons par exemple.

La deuxième phase consiste à positionner et fixer le câble optique sur un support mural entre le point Y et la prise T.

Un dispositif d'installation D₁ réalisé selon un premier mode de réalisation va maintenant être décrit en référence à la figure 2.

Le dispositif d'installation D₁ comporte une gaine de protection G1 et un élément rigide R₁.

La gaine de protection G₁ entoure un câble optique F₁ comprenant un ou plusieurs fibres optiques.

A titre d'alternative, la gaine de protection G₁ entoure plusieurs câbles optiques.

Le câble optique F₁ est par exemple un câble optique souple de faible sensibilité au rayon de courbure. Les caractéristiques d'un tel câble sont par exemple décrites dans la recommandation UIT G657 "Caracteristics of a bending lost insensitive single mode optical fibre and cable for the access network". Son diamètre est par exemple de 0,25mm (pour "millimètres"). Le câble optique F1 représente un exemple de câble de transmission de l'invention.

A titre d'alternative, le diamètre du câble optique F1 est supérieur à 0,25mm.

La gaine de protection G₁ est fabriquée autour du câble F₁, de façon classique, par exemple par un procédé d'extrusion plastique. Un tel procédé est connu de l'homme de l'art et ne sera pas décrit ici.

Dans le mode de réalisation décrit, le câble optique F1 est maintenu serré dans la gaine G₁.

A titre d'alternative, le câble F₁ est positionné de façon libre dans la gaine de protection G₁.

Le matériau utilisé pour la gaine de protection G₁ est un matériau souple, par exemple un PVC (pour "polychlorure de vinyle").

A titre d'alternative, le matériau utilisé pour la gaine de protection G₁ est un PE (pour "polyéthylène"), un PA (pour "polyamide") ou encore composé de matériaux plastiques et d'additifs permettant d'améliorer les caractéristiques fonctionnelles telles que la résistance au feu ou au frottement.

La gaine de protection G₁ a une forme cylindrique. A titre d'alternative, la gaine de protection G₁ est de forme parallépipédique ou de section droite ovoïde.

Un évidement E₁ est formé dans la gaine de protection G₁. La taille et la forme de l'évidement sont telles que l'évidement puisse contenir l'élément rigide R₁.

L'évidement E₁ est par exemple réalisé lors de la fabrication de la gaine.

L'évidement E₁ est par exemple de forme cylindrique.

Dans le mode de réalisation décrit, le diamètre de l'élément rigide R₁ est compris entre 0,5mm et 1,6 mm.

L'élément rigide R₁ est par exemple une tige en matériau composite à base de fibre de verre et plastique, par exemple un cylindre en FRP (pour "Fiber reinforced plastic").

A titre d'alternative, l'élément rigide R₁ est une fibre de carbone, une fibre d'aramide, une tige de plastique ou de métal.

Egalement à titre d'alternative, l'évidement E₁ et l'élément rigide R₁ ont une forme parallélépipédique ou ovoïde.

L'élément rigide R₁ est par exemple installé dans la gaine de protection G₁ parallèlement à la phase d'extrusion de la gaine de protection, au moyen d'une filière adaptée, de dispositifs de déroulage, guidage et de régulation de la tension de l'élément.

A titre d'alternative, l'élément rigide R₁ est installé postérieurement à l'opération d'extrusion de la gaine G₁.

L'élément rigide R₁ inséré dans la gaine de protection G₁ permet de conférer à l'ensemble une rigidité suffisante pour permettre son passage aisé entre les points X et Y.

Selon l'invention la gaine de protection G₁ possède une fente longitudinale V₁. La fente V₁ permet le retrait ou l'insertion de l'élément rigide R₁ dans la gaine G₁.

La largeur de la fente est par exemple déterminée en fonction du matériau de la gaine de protection et des diamètres respectifs de la gaine de protection et de l'évidement.

A titre d'alternative, la fente V₁ est prédécoupée et n'est découpée que par un opérateur souhaitant désolidariser l'élément rigide R₁ de la gaine de protection G₁.

Le dispositif d'installation D₁ étant amené au niveau de la prise terminale T dans l'appartement L de l'immeuble I, l'élément rigide R₁ peut être désolidarisé de la gaine de protection G₁, au moins sur la partie du dispositif d'installation D₁ en apparent dans l'appartement L, c'est-à-dire la partie entre les points Y et T (figure 1).

Un support profilé est fixé sur les murs de l'appartement en respectant le trajet que doit effectuer le câble optique entre les points Y et T. Puis la gaine de protection G₁ contenant le câble F₁ est clipsée sur le support profilé fixé.

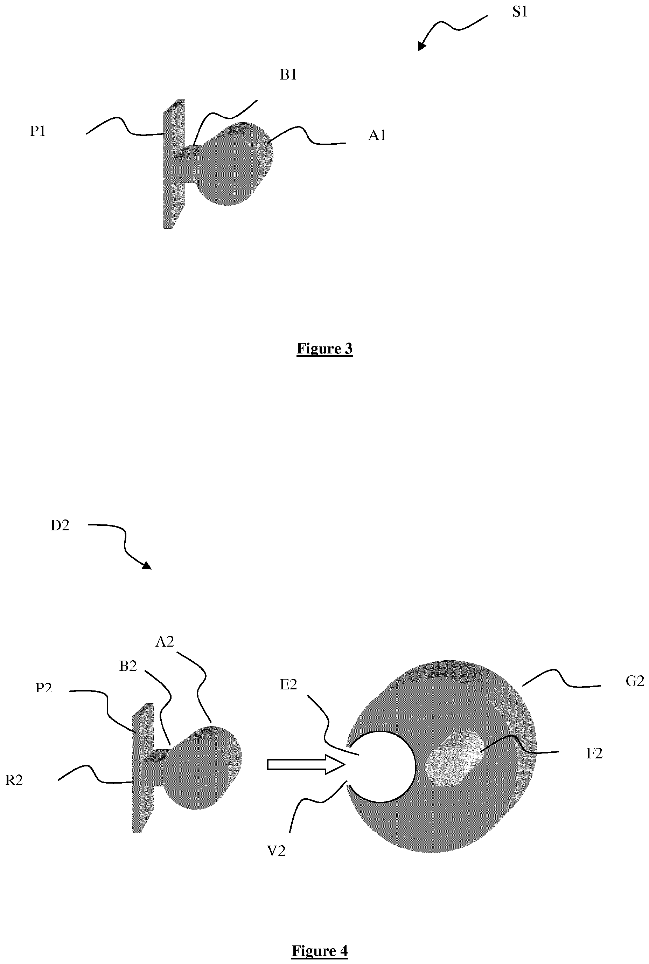

La figure 3 illustre un exemple de support profilé S₁ comportant une partie cylindrique A₁, un étranglement B₁ et un pied P₁.

La partie cylindrique A₁ est apte à être insérée dans l'évidement E₁. L'étranglement B₁ permet le maintien de la gaine de protection G₁ sur le support profilé S₁. Le pied P₁ permet la fixation aisée du support profilé S₁ sur les murs de l'appartement.

Avantageusement, l'étranglement B₁ du support profilé S₁ et la fente V₁ de la gaine de protection G₁ ont la même taille.

Le support profilé S₁ est réalisé par extrusion d'un profilé adapté à la forme de l'évidement E₁ de la gaine de protection G₁.

A titre d'alternative, le support profilé est réalisé par moulage.

Le matériau utilisé pour le profilé est suffisamment souple pour être compatible avec les différentes configurations des supports muraux (plinthes, moulures, angles de cloisons ou de murs, fenêtres....)

Le support profilé S₁ permet une pose soignée et facile.

La pose de la gaine de protection sur un support profilé permet également de désolidariser la gaine de protection du support profilé lors de travaux dans l'appartement et limite ainsi les risques de dommages (coupures, chocs, écrasements...).

Le support profilé S₁ protège le câble optique F₁ d'un écrasement ou d'un impact. En effet, lors d'un écrasement, le support profilé S1, de plus grande rigidité, offre une résistance plus grande que le câble.

A titre d'alternative, la gaine de protection G₁, souple, peut être fixée, de façon classique, par exemple par collage ou agrafage, le long des plinthes et fenêtres entre les points Y et T.

Encore à titre d'alternative, l'élément rigide R₁ n'est pas séparé de la gaine G₁ et l'ensemble est collé entre les points Y et T.

Encore à titre d'alternative, seules des parties de l'élément rigide R₁ sont séparées de la gaine de protection G₁. Par exemple, l'ensemble constitué de la gaine de protection et de l'élément rigide est collé sur les plinthes droites et l'élément rigide est enlevé, pour plus de souplesse, pour réaliser la fixation du câble autour d'une fenêtre.

En référence à la figure 4, un mode de réalisation du dispositif d'installation ne formant pas partie de l'invention va être décrit.

Un dispositif d'installation D₂ comporte une gaine de protection G₂ et un élément rigide R₂.

La gaine de protection G₂ entoure un câble optique F₂ comprenant une ou plusieurs fibres optiques.

Un évidement E₂ est réalisé dans la gaine de protection G₂. La gaine de protection G₂ possède une fente longitudinale V₂ pour le retrait ou l'insertion de l'élément rigide R₂ dans la gaine G₂.

L'élément rigide R₂ est un support profilé possédant une partie cylindrique A₂, un étranglement B₂ et un pied P₂.

La partie cylindrique A₂ est apte à être insérée dans l'évidement E₂. L'étranglement B₂ permet le maintien du support profilé R₂ dans le dispositif d'installation D₂ lors du passage dans une conduite. Le pied P₂ permet la fixation aisée du support profilé sur un support mural de l'appartement.

Lors de la phase de fixation, le support profilé R₂ est extrait de la gaine de protection G₂ sur la partie de la gaine passant en apparent dans l'appartement. Le support profilé R₂ est ensuite fixé aux murs selon le trajet que doit emprunter le câble entre les points Y et T. Puis la gaine de protection G₂ est clipsée sur le support profilé R₂.

A titre d'alternative, seules des parties de l'élément rigide R₂ sont séparées de la gaine de protection G₂. Par exemple, l'ensemble constitué de la gaine de protection G₂ et de l'élément rigide R₂ est collé sur les plinthes et l'élément rigide R₂ est enlevé, pour plus de souplesse, pour réaliser la fixation du câble autour d'une fenêtre.

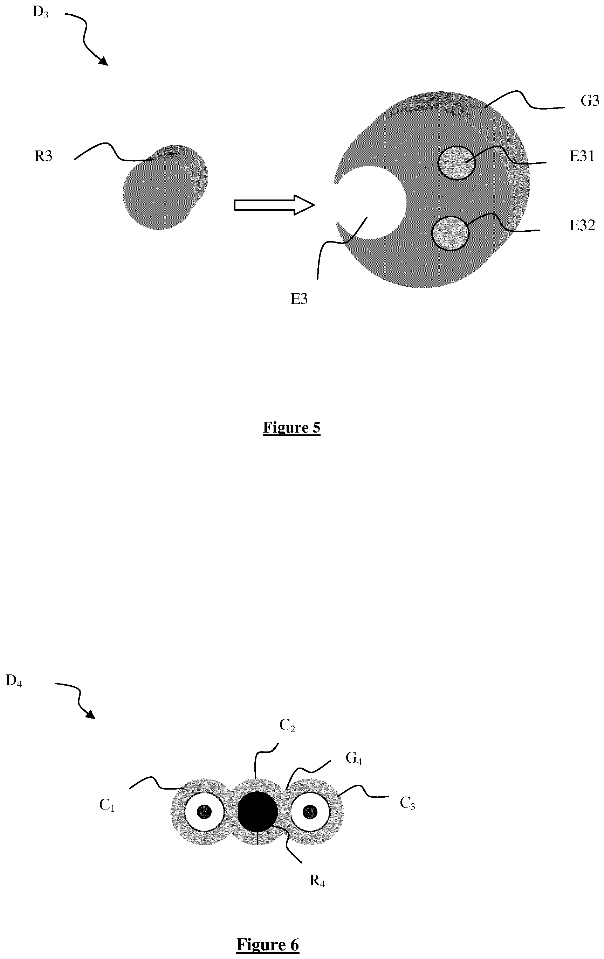

La figure 5 illustre un deuxième mode de réalisation d'un dispositif d'installation D₃ comportant une gaine de protection G₃ et un élément rigide R₃. La gaine de protection G₃ comporte un premier évidement E₃ apte à recevoir l'élément rigide R₃. Elle comporte également deux autres évidements E₃₁ et E₃₂ aptes à recevoir respectivement un premier câble de transmission, par exemple un câble optique et un second câble de transmission, par exemple une paire de fils cuivrés pour liaison téléphonique de type RTC.

La figure 6 illustre un troisième mode de réalisation d'un dispositif d'installation D₄ comportant une gaine de protection G₄ et un élément rigide R₄. Dans ce mode de réalisation, la gaine de protection G₄ est composée de trois cylindres C₁, C₂, C₃ juxtaposés. Les cylindres C₁ et C₃ sont aptes à contenir respectivement un câble de transmission, par exemple une fibre optique. Le cylindre C₂ contient un évidement longitudinal apte à contenir l'élément rigide R₄.

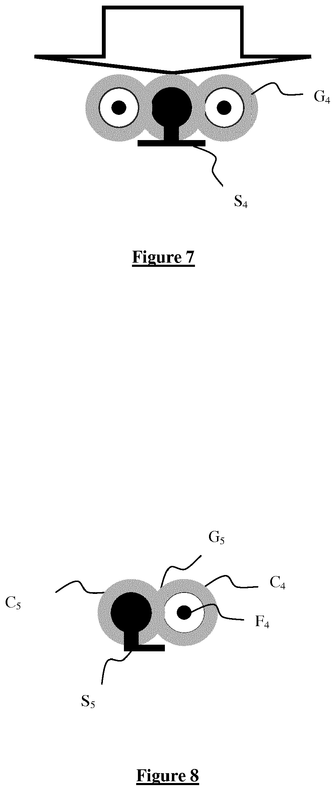

La figure 7 illustre l'impact d'un écrasement sur la gaine de protection G4. Après retrait de l'élément rigide R₄, la gaine de protection G₄ est clipsée sur un support profilé S₄. Le support profilé S₄ est par exemple fixé le long d'une plinthe. Sous l'effet d'un écrasement, le support profilé S₄ rigide empêche l'écrasement des câbles de la gaine de protection.

La figure 8 illustre un mode de réalisation d'une gaine de protection G₅ clipsée sur un support profilé S₅ qui ne forme pas partie de invention . Dans ce mode de réalisation, la gaine de protection G₅ est composée de deux cylindres C₄ et C₅ juxtaposés. Le cylindre C₄ est apte à contenir un câble de transmission, par exemple une fibre optique F4. Le cylindre C₅ contient un évidement longitudinal apte à contenir un élément rigide adapté à la forme de l'évidement.

L'évidement longitudinal est également apte à recevoir le support profilé S₅ comportant une partie cylindrique, un étranglement et un pied. Le pied du support profilé S₅ peut être fixé sur un support mural pour une fixation du câble en mode apparent.

## Revendications

1. Dispositif d'installation (D1, D2) de câble de transmission dans un bâtiment , ledit dispositif d'installation comprenant :
- une gaine de protection (G1, G2) entourant au moins un câble de transmission (F1, F2), ladite gaine comprenant au moins un évidement longitudinal (E1, E2) et ladite gaine ne comprenant pas de fente permettant le retrait dudit au moins un câble,
et
- un élément rigide (R1,R2) inséré complètement dans un desdits au moins un évidement pour conférer audit dispositif une rigidité suffisante pour faciliter le passage de la gaine dans au moins une conduite dudit bâtiment ; ledit élément rigide comblant lorsqu'il est inséré dans ledit évidement tout l'espace dudit évidement ; et ladite gaine de protection comportant une fente longitudinale permettant le retrait et/ou l'insertion dudit élément rigide.

2. Dispositif selon la revendication 1 dans lequel ledit au moins un câble de transmission est excentré dans la gaine de protection.

3. Dispositif selon la revendication 1 dans lequel au moins un câble de transmission est un câble optique.

4. Dispositif selon la revendication 1 **caractérisé en ce que** la gaine de protection a une forme cylindrique.

5. Dispositif selon la revendication 1 **caractérisé en ce que** la gaine de protection est constituée d'au moins un premier et un deuxième cylindres, le premier étant apte à entourer un câble de transmission et le deuxième cylindre étant apte à comporter l'évidement.

6. Dispositif selon la revendication 1 **caractérisé en ce que** la gaine de protection entoure au moins un premier et un deuxième câbles de transmission, le premier câble étant d'un premier type et le deuxième câble étant d'un deuxième type.

7. Utilisation d'un dispositif d'installation (D1, D2) de câble de transmission selon la revendication 1 pour installer un câble dans une conduite d'un bâtiment.

## Patentansprüche

1. Vorrichtung zum Verlegen (D1, D2) eines Übertragungskabels in einem Gebäude, wobei die Vorrichtung zum Verlegen Folgendes umfasst:
- einen Schutzmantel (G1, G2), der mindestens ein Übertragungskabel (F1, F2) umgibt, wobei der Mantel mindestens eine längliche Aussparung (E1, E2) umfasst, und der Mantel keinen Schlitz umfasst, der das Herausnehmen des mindestens einen Kabels erlaubt, und
- ein starres Element (R1, R2), das vollständig in eine der mindestens einen Aussparung eingefügt ist, um der Vorrichtung eine Steifigkeit zu verleihen, die ausreicht, um das Durchgehen des Mantels in mindestens einer Leitung des Gebäudes zu erleichtern, wobei das starre Element, wenn es in die Aussparung eingefügt wird, den gesamten Raum der Aussparung füllt, und wobei der Schutzmantel einen Längsschlitz umfasst, der das Herausnehmen und/oder das Einfügen des starren Elements erlaubt.

2. Vorrichtung nach Anspruch 1, wobei das mindestens eine Übertragungskabel in dem Schutzmantel exzentriert ist.

3. Vorrichtung nach Anspruch 1, wobei mindestens ein Übertragungskabel ein Glasfaserkabel ist.

4. Vorrichtung nach Anspruch 1, **dadurch gekennzeichnet, dass** der Schutzmantel eine zylindrische Form hat.

5. Vorrichtung nach Anspruch 1, **dadurch gekennzeichnet, dass** der Schutzmantel aus mindestens einem ersten und einem zweiten Zylinder besteht, wobei der erste geeignet ist, ein Übertragungskabel zu umgeben, und wobei der zweite Zylinder geeignet ist, um die Aussparung aufzuweisen.

6. Vorrichtung nach Anspruch 1, **dadurch gekennzeichnet, dass** der Schutzmantel mindestens ein erstes und ein zweites Übertragungskabel umgibt, wobei das erste Kabel eines ersten Typs ist und das zweite Kabel eines zweiten Typs ist.

7. Verwendung einer Vorrichtung zum Verlegen (D1, D2) eines Übertragungskabels nach Anspruch 1, zum Verlegen eines Kabels in einer Leitung eines Gebäudes.

## Claims

1. Device (D1, D2) for installing a transmission cable in a building, said installation device comprising:
- a protecting sheath (G1, G2) surrounding at least one transmission cable (F1, F2),
said sheath comprising at least one longitudinal void (E1, E2) and said sheath not including any slit allowing the removal of said at least one cable, and
- a rigid element (Rl, R2) inserted fully into at least one of said voids to confer on said device a sufficient rigidity to facilitate the passage of the sheath in at least one duct of said building; said rigid element filling, when it is inserted into said void, all the space of said void; and said protective sheath comprising a longitudinal slit allowing the removal and/or the insertion of said rigid element.

2. Device according to Claim 1, in which said at least one transmission cable is off-centre in the protective sheath.

3. Device according to Claim 1, in which at least one transmission cable is an optical cable.

4. Device according to Claim 1, **characterized in that** the protective sheath has a cylindrical form.

5. Device according to Claim 1, **characterized in that** the protective sheath consists of at least one first and one second cylinders, the first being capable of surrounding a transmission cable and the second cylinder being capable of including the void.

6. Device according to Claim 1, **characterized in that** the protective sheath surrounds at least one first and one second transmission cables, the first cable being of a first type and the second cable being of a second type.

7. Use of a transmission cable installation device (D1, D2) according to Claim 1 for installing a cable in a duct of a building.
